# EUROPÄISCHE PATENTANMELDUNG

(11) **EP 3 451 086 A1**
(43) Veröffentlichungstag der Anmeldung: **06.03.2019**
(21) Anmeldenummer: 17188774.8
(22) Anmeldetag: 31.08.2017
(51) Int. Cl.: G05B 19/042, G05B 9/02, G05B 19/05, G05B 23/02

(54) **VERFAHREN ZUM BETRIEB EINER AUF FUNKTIONALE SICHERHEIT AUSGELEGTEN MASCHINE ODER ANLAGE UND ENGINEERINGSYSTEM**

(71) Anmelder: Siemens Aktiengesellschaft, 80333 München (DE)
(72) Erfinder: Extra, Johannes, 91058 Erlangen (DE); Jartyn, Hermann, 91338 Igensdorf (DE)

(57) **Zusammenfassung**

Die Erfindung betrifft ein Verfahren zum Betrieb einer auf funktionale Sicherheit ausgelegten Maschine oder Anlage (2),
- wobei sicherheitsrelevante Teile der Maschine oder Anlage (2) auf der Basis von einstellbaren sicherheitskritischen Parametern (11,12,13) über eine Steuereinrichtung (1) gesteuert und/oder geregelt werden, und die Steuereinrichtung (1) über ein Engineeringsystem (3) programmiert und/oder parametriert wird,
- wobei im Engineeringsystem (3) zu einem Datenbereich (101, ..., 110), welcher zumindest ein oder mehrere von den einstellbaren sicherheitskritischen Parametern (11,12,13) aufweist, ein Prüfwert (PW) berechnet wird,
- wobei nach einer erfolgreichen Inbetriebsetzung der Maschine oder Anlage und erfolgter Sicherheitsfreigabe (20) bezüglich der eingestellten sicherheitskritischen Parameter (11,12,13) ein Protokoll (P) mit einer Mehrzahl von Prüfwerten (PW1, ..., PW10) für eine Mehrzahl von Datenbereichen (101, ..., 110) und Referenzen (R1, ..., R10) zu den Datenbereichen (101,...,110) gebildet und abgespeichert wird,
wobei zum Erkennen von Veränderungen an den sicherheitskritischen Parametern (11,12,13) in den Datenbereichen (101,110) die aktuell vorherrschenden Prüfwerte (PW₍ₜ₎) mit den in dem Protokoll (P) abgespeicherten Prüfwerten (PW1, ..., PW10) verglichen werden und diejenigen Referenzen (R1,...,R10) zu den Datenbereichen (101,...,110) ausgefiltert werden, bei denen sich der Prüfwert (PW₍ₜ₎) geändert hat und die ausgefilterte Referenz (R1, ..., R10) oder die ausgefilterten Referenzen (R1, ..., R10) mit einer Markierung (M) verknüpft werden, wobei die Markierung (M) auf einer grafischen Benutzerschnittstelle (5) des Engineeringsystems (3) dargestellt wird.

## Beschreibung

Die Erfindung betrifft ein Verfahren zum Betrieb einer auf funktionale Sicherheit ausgelegten Maschine oder Anlage, wobei sicherheitsrelevante Teile der Maschine oder Anlage auf der Basis von einstellbaren sicherheitskritischen Parametern über eine Steuereinrichtung gesteuert und/oder geregelt werden, und die Steuereinrichtung über ein Engineeringsystem programmiert und/oder parametriert wird, wobei im Engineeringsystem zu einem Datenbereich, welcher zumindest ein oder mehrere von den einstellbaren sicherheitskritischen Parametern aufweist ein Prüfwert berechnet wird, wobei nach einer erfolgreichen Inbetriebsetzung der Maschine oder der Anlage und erfolgter Sicherheitsfreigabe bezüglich der eingestellten sicherheitskritischen Parameter ein Protokoll mit einer Mehrzahl von Prüfwerten für eine Mehrzahl von Datenbereichen und Referenzen zu den Datenbereichen gebildet und abgespeichert wird.

Des Weiteren betrifft ein Engineeringsystem zum Parametrieren einer Steuereinrichtung, welche eine auf funktionale Sicherheit ausgelegte Maschine oder Anlage steuert, wobei sicherheitsrelevante Teile der Maschine oder Anlage auf der Basis von einstellbaren sicherheitskritischen Parametern über die Steuereinrichtung gesteuert und oder geregelt werden, aufweisend eine grafische Benutzerschnittstelle, ausgestaltet zu einen Datenbereich, welcher zumindest ein oder mehrere von den einstellbaren sicherheitskritischen Parametern aufweist, ein Prüfwert zu berechnen, weiterhin ausgestaltet ein Protokoll mit einer Mehrzahl von Prüfwerten eine Mehrzahl von Prüfwerten für eine Mehrzahl von Datenbereichen und Referenzen zu den Datenbereichen zu bilden und abzuspeichern.

Im Sinne der Erfindung sind die Prüfwerte ein Indikator für einen korrekten Inhalt der sicherheitskritischen Parameter.

Die Norm EN 62061 "Sicherheit von Maschinen - funktionale Sicherheit von elektrischen, elektronischen und programmierbaren Steuerungen von Maschinen" definiert umfangreiche Anforderungen. Außerdem gibt sie Empfehlungen für Entwurf, Integration und Validierung von sicherheitsbezogenen elektrischen, elektronischen sowie programmierbaren elektronischen Steuerungssystemen für Maschinen.

Bei Anlagen/Maschinen/Robotern mit umfangreicher Sicherheitstechnik müssen Eingriffe an den sicherheitsrelevanten Daten schnell und präzise erkannt werden. Nur so ist eine schnelle Entscheidung einer erneuten Sicherheitsabnahme zu treffen. In der Regel verfügt jedes Sicherheitselement für sich über Sicherheitsvorkehrungen wie z.B. "CRC-gesicherte Daten". Ein Inbetriebsetzer, der notwendige Eingriffe vornimmt, muss schnell die Relevanz seines Eingriffes erkennen können. Bei Maschinen und Anlagen mit z.B. 128 auf Sicherheit ausgelegte "Safety-Achsen" sind große Datenbereiche wie z.B. F-Parameter für Profisafe Telegramme oder sichere Antriebsparameter als geschützt und sicherheitsbezogene Parameter zu betrachten.

Wollte zuvor ein Anwender herausfinden, ob sich an den sicherheitskritischen Parametern nach einer Sicherheitsfreigabe etwas geändert hat, so musste er aus den Akten einen Sicherheitsausdruck für die Anlage herausholen und mit diesem archivierten Sicherheitsausdruck Parameter für Parameter mit den jetzt vorherrschenden Parametern in der Anlage vergleichen.

Der Erfindung liegt die Aufgabe zugrunde, ein Verfahren und ein Engineeringsystem bereitzustellen, um diesen Vergleich schneller und leichter auszugestalten.

Die Aufgabe wird dadurch gelöst, dass zum Erkennen von Veränderungen an dem sicherheitskritischen Parametern in den Datenbereichen die aktuell vorherrschenden Prüfwerte mit dem in dem Protokoll abgespeicherten Prüfwerten verglichen werden und diejenigen Referenzen zu den Datenbereichen ausgefiltert werden, bei denen sich der Prüfwert verändert hat und die ausgefilterte Referenz oder die ausgefilterten Referenzen mit einer Markierung verknüpft werden, wobei die Markierung auf einer grafischen Benutzerschnittstelle des Engineeringsystems dargestellt wird.

In einem Engineeringsystem sind in der Regel alle Daten zum Betrieb einer Automatisierungsanlage vorhanden. Dabei handelt es sich um eine sehr große Anzahl von Daten und Programmen. Eine Auflistung aller Daten mit den darin enthaltenen Parametern ist unübersichtlich. Befindet sich eine Anlage in einem abgenommenen Status bezüglich der Sicherheitsfunktionen ist es wichtig zu erkennen, ob später erfolgte Eingriffe die Sicherheit der Anlage beeinträchtigen können. Für eine schnelle und genaue Analyse der Sicherheit einer Automatisierungsanlage sind erfindungsgemäß viel weniger Daten erforderlich. Da die meisten sicherheitsrelevanten Datenbereiche in der Regel CRC gesichert sind, wie z.B. Datenbereiche der Hardwareprojektierung von den Antriebsparametern oder Datenbereiche von den F-Programmen. Ein Engineeringsystem könnte nun nach einer Aufforderung durch einen Inbetriebsetzer oder auch automatisch in einem Editor in welchen alle Datenbereiche dargestellt werden, eine Markierung an den Datenbereich setzen, welcher als verändert gilt. Ein Inbetriebsetzer kann so anhand der Markierung schnell den markierten Datenbereich in einem weiteren Fenster öffnen und eine mögliche Veränderung der sicherheitskritischen Parameter korrigieren.

In einer weiteren Ausgestaltung des Verfahrens wird bei einer erkannten Veränderung an den sicherheitskritischen Parametern in den Datenbereichen die Steuereinrichtung derart betrieben, dass die Maschine oder die Anlage in einen sicheren Zustand gebracht wird und erst wieder in einen Normalbetrieb übergeht, wenn durch einen weiteren Prüfschritt bestätigt ist, dass auch mit veränderten Parametern eine Sicherheitsfreigabe erteilt werden kann.

Vorteilhafterweise wird das Verfahren genutzt, wenn die sicherheitskritischen Parameter Verfahrwege von zu steuernden Achsen beschreiben.

Eine Weiterbildung des Verfahrens sieht vor, für sicherheitstechnische Parameter von sicherheitsrelevanten Teilen der Maschine oder Anlage eine Gruppe zu bilden, und bei Feststellung nur einer Veränderung eines Parameters wird die ganze Gruppe sicherheitstechnisch in Frage gestellt.

Für das eingangs genannte Engineeringsystem wird die Aufgabe durch ein Erkennungsmittel zum Erkennen von Veränderungen an den sicherheitskritischen Parametern gelöst. Das Erkennungsmittel ist dabei ausgestaltet, die aktuell vorherrschenden Prüfwerte mit den in dem Protokoll abgespeicherten Prüfwerten zu vergleichen und diejenigen Referenzen zu den Datenbereichen auszufiltern, bei denen sich der Prüfwert geändert hat und die ausgefilterte Referenz oder die ausgefilterten Referenzen mit einer Markierung zu verknüpfen, wobei weiterhin eine grafische Benutzerschnittstelle ausgestaltet ist, die Markierung darzustellen.

Die Erfindung nachfolgend näher anhand eines Ausführungsbeispiels in der Zeichnung erläutert. Es zeigen:
- FIG 1: ein Übersichtsbild einer auf funktionale Sicherheit ausgelegten Maschine,
- FIG 2: eine grafische Benutzerschnittstelle, wie sie auf einen Engineeringsystem zu finden ist und
- FIG 3: die grafische Benutzerschnittstelle aus FIG 2 mit einer Markierung, welcher einen Hinweise auf eine Veränderung gibt.

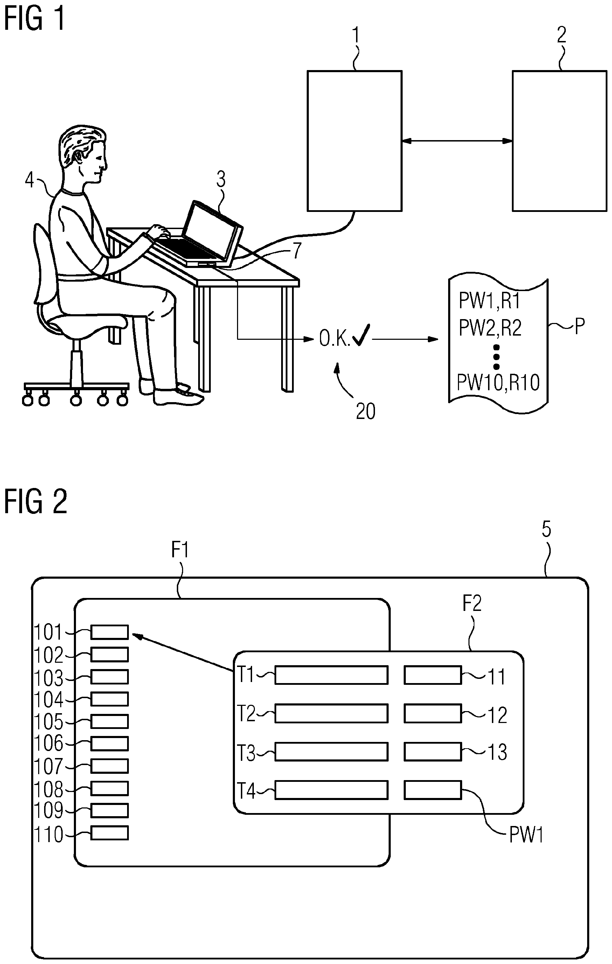

Gemäß FIG 1 ist eine Steuereinrichtung 1 mit einer Anlage 2 verbunden, wobei sicherheitsrelevante Teile der Anlage 2 auf der Basis von einstellbaren sicherheitskritischen Parametern 11,12,13 (siehe FIG 2) über die Steuereinrichtung 1 gesteuert und oder geregelt werden. Die Steuereinrichtung 1 wird über ein Engineeringsystem 3 programmiert und/oder parametriert. An dem Engineeringsystem 3 kann ein Inbetriebsetzer 4 die sicherheitskritischen Parameter 11,12,13 einstellen und verändern. Nach einer erfolgreichen Inbetriebsetzung der Anlage 2 und einer erfolgten Sicherheitsfreigabe 20 bezüglich der eingestellten sicherheitskritischen Parameter 11,12,13 wird ein Protokoll P mit einer Mehrzahl von Prüfwerten PW1,...,PW10 für eine Mehrzahl von Datenbereichen 101,...,110 und Referenzen R1,...,R10 zu den Datenbereichen 101,...,110 gebildet und abgespeichert.

Mit der FIG 2 ist gezeigt, wie der Inbetriebsetzer 4, beispielsweise zehn Datenbereiche 101,...,110, welche in einen ersten Fenster F1 angezeigt werden, über ein zweites Fenster F2 parametrieren bzw. einstellen oder verändern kann. Macht der Inbetriebsetzer 4 einen Mausklick auf den ersten Datenbereich 101 so öffnet sich das zweite Fenster F2 und es werden ein erstes Textfeld T1, ein zweites Textfeld T2, ein drittes Textfeld T3 und ein viertes Textfeld T4 angezeigt. Das erste Textfeld T1 beschreibt beispielsweise eine sichere F-Quelladresse, das zweite Textfeld T2 beschreibt eine sichere F-Zieladresse und das dritte Textfeld T3 beschreibt eine Watch-dog-Zeit. Dem ersten Textfeld T1 ist dann der erste sicherheitskritische Parameter 11, dem zweiten Textfeld T2 ist der zweite sicherheitskritische Parameter 12 und dem dritten Textfeld T3 ist der dritte sicherheitskritische Parameter 13 zugeordnet. In dem Engineeringsystem 3 werden zu dem ersten Datenbereich 101 für die drei sicherheitskritischen Parameter 11,12,13 ein erster Prüfwert PW1 berechnet.

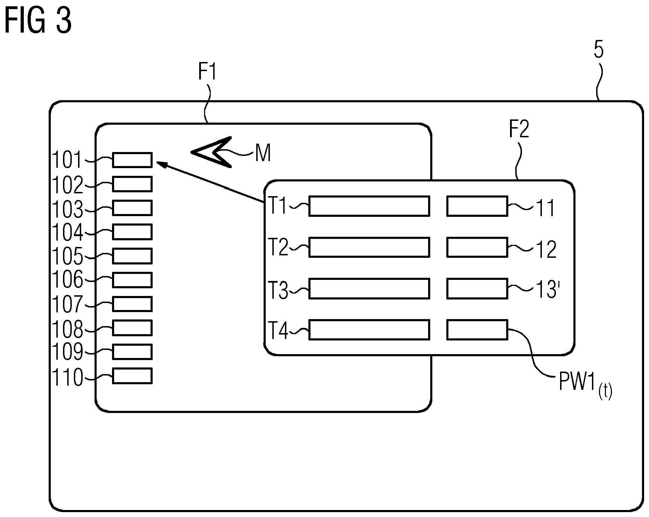

Mit der FIG 3 ist die grafische Benutzerschnittstelle 5 aus FIG 2 gezeigt, allerdings wird jetzt dem Inbetriebsetzer 4 zum Erkennen von Veränderungen eine Markierung M aufgezeigt.

Nach einer erkannten Veränderung wird auf der grafischen Benutzerschnittstelle 5 des Engineeringsystems 3 dem Inbetriebsetzer 4 in dem ersten Fenster F1 neben der Auflistung der zehn parametrierten Datenbereiche 101,...,110 an der Stelle des ersten Datenbereiches 101 die Markierung M aufgezeigt. Nun kann der Inbetriebsetzer 4 anhand der Markierung den Datenbereich 101 anwählen, wobei sich dadurch das zweite Fenster F2 auftut und nun kann er die sicherheitskritischen Parameter 11,12,13 überprüfen. In diesem Fall hat sich der dritte sicherheitskritische Parameter 13 in einen veränderten sicherheitskritischen Parameter 13' verändert. Eine Watch-Dog Time für einen Verfahrweg einer Achse hat sich beispielsweise von 300 ms auf 400 ms verändert. Nun müsste eine erneute Sicherheitsfreigabe durch den Inbetriebsetzer 4 erfolgen, aber zuvor muss dieser einschätzen, ob diese Veränderung die Sicherheit nicht gefährdet.

## Patentansprüche

1. Verfahren zum Betrieb einer auf funktionale Sicherheit ausgelegten Maschine oder Anlage (2),
- wobei sicherheitsrelevante Teile der Maschine oder Anlage (2) auf der Basis von einstellbaren sicherheitskritischen Parametern (11,12,13) über eine Steuereinrichtung (1) gesteuert und/oder geregelt werden, und die Steuereinrichtung (1) über ein Engineeringsystem (3) programmiert und/oder parametriert wird,
- wobei im Engineeringsystem (3) zu einem Datenbereich (101,...,110), welcher zumindest ein oder mehrere von den einstellbaren sicherheitskritischen Parametern (11,12,13) aufweist, ein Prüfwert (PW) berechnet wird,
- wobei nach einer erfolgreichen Inbetriebsetzung der Maschine oder Anlage und erfolgter Sicherheitsfreigabe (20) bezüglich der eingestellten sicherheitskritischen Parameter (11,12,13) ein Protokoll (P) mit einer Mehrzahl von Prüfwerten (PW1,...,PW10) für eine Mehrzahl von Datenbereichen (101,...,110) und Referenzen (R1,...,R10) zu den Datenbereichen (101,...,110) gebildet und abgespeichert wird,
**dadurch gekennzeichnet dass** zum Erkennen von Veränderungen an den sicherheitskritischen Parametern (11,12,13) in den Datenbereichen (101,110) die aktuell vorherrschenden Prüfwerte (PW₍ₜ₎) mit den in dem Protokoll (P) abgespeicherten Prüfwerten (PW1,...,PW10) verglichen werden und diejenigen Referenzen (R1,...,R10) zu den Datenbereichen (101,...,110) ausgefiltert werden, bei denen sich der Prüfwert (PW₍ₜ₎) geändert hat und die ausgefilterte Referenz (R1,...,R10) oder die ausgefilterten Referenzen (R1,...,R10) mit einer Markierung (M) verknüpft werden, wobei die Markierung (M) auf einer grafischen Benutzerschnittstelle (5) des Engineeringsystems (3) dargestellt wird.

2. Verfahren nach Anspruch 1, wobei bei erkannten Veränderungen an den sicherheitskritischen Parametern (11,12,13) in den Datenbereichen (101,...,110) die Steuereinrichtung (1) derart betrieben wird, dass die Maschine oder die Anlage (2) in einen sicheren Zustand gebracht wird und erst wieder in einen Normalbetrieb übergeht, wenn durch einen weiteren Prüfschritt bestätigt ist, dass auch mit veränderten Parametern eine Sicherheitsfreigabe (20) erteilt werden kann.

3. Verfahren nach Anspruch 1 oder 2, wobei die sicherheitskritischen Parameter (11,12,13) Verfahrwege von zu steuernden Achsen beschreiben.

4. Verfahren nach einem der Ansprüche 1 bis 3, wobei für sicherheitstechnische Parameter (11,12,13) von sicherheitsrelevanten Teilen der Maschine oder Anlage (2) eine Gruppe gebildet wird und bei Feststellung nur einer Veränderung eines Parameters (11,12,13) wird die ganze Gruppe sicherheitstechnisch in Frage gestellt.

5. Engineeringsystem (3) zum Parametrieren einer Steuereinrichtung (1), welche eine auf funktionale Sicherheit ausgelegte Maschine oder Anlage (2) steuert, wobei sicherheitsrelevante Teile der Maschine oder Anlage (2) auf der Basis von einstellbaren sicherheitskritischen Parametern (11,12,13) über die Steuereinrichtung (1) gesteuert und/oder geregelt werden, aufweisend eine grafische Benutzerschnittstelle (5),
- ausgestaltet zu einem Datenbereich (101,...,110), welcher zumindest ein oder mehrere von den einstellbaren sicherheitskritischen Parametern (11,12,13) aufweist, ein Prüfwert (PW1,...,PW10) zu berechnen,
- weiterhin ausgestaltet ein Protokoll (P) mit einer Mehrzahl von Prüfwerten (PW1,...,PW10) für eine Mehrzahl von Datenbereichen (101,...,110) und Referenzen (R1,...,R10) zu den Datenbereichen (101,...,110) zu bilden und abzuspeichern,
**gekennzeichnet durch**
ein Erkennungsmittel (7) zum Erkennen von Veränderungen an den sicherheitskritischen Parametern (11,12,13) in den Datenbereichen (101,...,110), wobei das Erkennungsmittel (7) ausgestaltet ist die aktuell vorherrschenden Prüfwerte (PW₍ₜ₎) mit den in dem Protokoll (P) abgespeicherten Prüfwerten (PW1,...,PW10) zu vergleichen und diejenigen Referenzen (R1,...,R10) zu den Datenbereichen (101,...,110) auszufiltern, bei denen sich der Prüfwert (PW₍ₜ₎) geändert hat und die ausgefilterte Referenz (R1,...,R10) oder die ausgefilterten Referenzen (R1,...,R10) mit einer Markierung (M) zu verknüpfen, wobei weiterhin eine grafische Benutzerschnittstelle (5) ausgestaltet ist die Markierung (M) darzustellen.
